# EUROPEAN PATENT APPLICATION

(11) **EP 1 544 185 A2**
(43) Date of publication of application: **22.06.2005**
(21) Application number: 04257790.8
(22) Date of filing: 15.12.2004
(51) Int. Cl.: C04B 41/89, C23C 28/04, C23C 4/10, F01D 5/28

(54) **Environmental barrier coating comprising a gas velocity reducing top layer**

(30) Priority: 16.12.2003 US 737138
(71) Applicant: UNITED TECHNOLOGIES CORPORATION, Hartford, Connecticut 06101 (US)
(72) Inventor: Eaton, Harry E, Woodstock Conecticut 06281 (US); Bhatia, Tania, Middletown Connecticut 06457 (US); Sun, Ellen Y, South Windsor Connecticut 06074 (US)
(74) Representative: Hall, Matthew Benjamin

(57) **Abstract**

A composite comprising a silicon based substrate, an environmental barrier coating (EBC) with a top layer, wherein the top layer comprises a velocity barrier layer. Velocity barrier layer is. any layer positioned between a flowing gas stream and the underlying EBC protective layer which acts to reduce the velocity of the gas stream which otherwise would impinge on the underlying protective layer. The velocity barrier layer preferably reduces the velocity of an impinging gas stream by at least 50% across the thickness of the velocity barrier layer. It also preferably reduces the velocity of the impinging gas stream to less than 1 meter per second across the thickness of the velocity barrier layer.

## Description

Silicon carbide, silicon nitride and other silica forming ceramics have been shown to exhibit accelerated oxidization in high temperature steam environments such as found in the combustor and turbine sections of gas turbine engines. This occurs due to reaction with water vapor leading to volatilization of the silica in the form of Si(OH)ₓ species. As a result, successful long term use of silicon carbide, silicon nitride and other silica forming ceramic and metallic components require the use of a protective coating such as an environmental barrier coating (EBC).

To date environmental barrier coatings, i.e., EBC's, have been developed for application to composites having a silicon based substrate. These composites are generally based on a two or three layer design utilizing a bond coat, an optional intermediate layer, and a protective layer. The bond coat, for example, is a dense continuous layer of silicon. The top protective layer can be, for example, an alkaline earth aluminosilicate based on barium, and/or strontium or a simple silicate based system such as yttrium silicate. The intermediate layer is generally a mixture of the protective layer with a second phase such as mullite. Engine testing of this EBC design on silicon carbide composites in combustor locations has shown significant benefit for industrial gas turbine use at temperatures of up to 1200°C and for durations of 15,000 hrs.

EBC's used at temperatures of up to 1500°C in applications such as turbine vane and blade locations, however, are limited to very short times due to degradation of the protective alkaline earth aluminosilicate or silicate layer. For example, measurement of alkaline earth aluminoslicate (BSAS) recession at 1500°C indicates normalized recession rates (velocity of 1 m/s and water partial pressure and total partial pressure of 1 atm each) of 250 to 275 microns per thousand hours. At turbine and vane velocities of 500 m/s, the estimated recession rate becomes much higher based on a velocity dependence of v^{1/2} (see: Smialek et al., Adv. Composite Mater., Vol. 8, No. 1, pp.33-45, 1999; equation 9a where J_{Si(OH4)}; e⁻ ^{(ΔG/RT)}. v^{1/2}. P^{3/2}; i.e. (volatility)_{T.P};v^{1/2}.

Naturally, it would be highly desirable to reduce the recession rates of EBC's when used or employed on turbine vane and blade locations exposed to high velocity, high temperatures, aqueous environments. Thus the use of a velocity barrier layer on the EBC system reduces recession by substantially reducing the velocity effect. Further, the velocity barrier layer will provide a decrease in temperature of the EBC protective layer under thermal gradient conditions as the velocity barrier layer will contribute to the thermal resistance of the coating system.

Accordingly, it is the principle object of the present invention to provide a top coat for EBC's employed on silicon based substrates, wherein the top coat decreases the recession rate of the EBC protective layer when employed in high velocity, high temperature, aqueous environments.

The foregoing object is achieved by the present invention by providing a composite comprising a silicon based substrate, an environmental barrier coating (EBC) with a top layer, wherein the top layer comprises a velocity barrier layer. By velocity barrier layer is meant any layer positioned between a flowing gas stream and the underlying EBC protective layer which acts to reduce the velocity of the gas stream which otherwise would impinge on the underlying protective layer.

The present invention relates to an article such as a turbine vane, turbine blade and the like which comprises a composite comprising a silicon base substrate, an environmental barrier coating (EBC) and a top layer, wherein the top layer comprises a velocity barrier layer. As used in the instant application, velocity barrier layer means a layer positioned between a flowing gas stream and the underlying EBC protective layer which acts to reduce the velocity of the gas stream which otherwise would impinge on the underlying EBC protective layer. The velocity barrier layer in accordance with the present invention (1) reduces the velocity of the impinging gas stream by at least 50% across the thickness of the velocity barrier layer and/or (2) reduces the velocity of an impinging gas stream to less than 1 meter per second across the thickness of the velocity barrier layer. As a result of the foregoing, the velocity barrier layer will provide a decrease in recession rates of the EBC protective layer.

The silicon substrate in the composite comprising an article in accordance with the present invention may be a silicon ceramic substrate or a silicon containing metal alloy. Preferably, the substrate is selected from the group consisting of silicon nitride, silicon carbide, silicon aluminum oxynitride, silicon nitride composite, silicon carbide composite, silicon carbon nitride, molybdenum alloy containing silicon, niobium alloy containing silicon, iron alloy containing silicon, nickel alloy containing silicon, cobalt alloy containing silicon, and mixtures and compounds thereof. The most preferred silicon substrate materials are silicon carbide, silicon nitride, silicon carbide composite, and silicon nitride composites.

The EBC protective layer used in the composite of the present invention which forms the desired article is a protective layer selected from the group consisting of silicon, refractory oxides, refractory oxide silicates, refractory oxide aluminosilicates, rare earth oxides, rare earth silicates, rare earth aluminosilicates, alkaline earth oxides, alkaline earth silicates, alkaline earth aluminosilicates, yttria, yttrium silicate, yttrium aluminosilicate, barium aluminosilicate, strontium aluminosilicate, barium-strontium aluminosilicate, oxides and silicates of molybdenum, silicon, tantalum, niobium, zirconium, hafnium, aluminum, titanium, and mixtures thereof. The most preferred EBC protective layers are comprising barium aluminosilicate, strontium aluminosilicate, barium-strontium aluminosilicate, yttrium silicate, rare earth oxides, rare earth silicates, zirconia, alumina, ytrria, tantala, silicon, hafnia, and mixtures thereof.

In accordance with the present invention, the velocity barrier layer comprises a ceramic layer. In accordance with the present invention, the ceramic layer should be porous. The amount of porosity can range from 1 to 50% by volume in the velocity layer, preferably from 10 to 35%. The purpose of the porosity is to increase the compliance of the velocity barrier layer and thereby reduce stresses to eliminate spallation of the velocity barrier layer from the EBC protective layer. This is especially important where the coefficient of thermal expansion (CTE) of the velocity barrier layer is different than the CTE of the EBC protective layer. The more the difference in CTE's, the more porosity that should be incorporated into the velocity barrier layer. However the maximum amount of porosity is limited by the requirement that the velocity barrier layer must exhibit sufficient erosion resistance to the air stream to meet minimum life requirements depending on the application. The porosity can result from a ceramic layer which contains pores, and/or is microcracked, and/or has a columnar grain structure. Pores can be introduced into the velocity barrier layer through a number of processes including processes similar to those taught in U.S. patent 4,759,957, and 4,664,973. Cracks can be introduced into the velocity barrier layer through a number of processes including the discussion found in the reference by H.E. Eaton and R. C. Novak, "A Study of the Effects of Variations in Parameters on the Strength and Modulus of Plasma Sprayed Zirconia", Surface and Coatings Technology, 27, (1968) p. 257-267. Columnar grains can be produced by physical vapor deposition (PVD) processing as discussed in the site "www.ipm.virginia.edu/research/PVD/Pubs/thesis6/chapter6.PDF". The foregoing porous structures will not effect the ability of the velocity barrier layer to function in the manner desired. As noted above, the velocity barrier layer should (1) reduce the velocity of an impinging gas stream by at least 50% across the thickness of the velocity barrier layer and/or (2) reduce the velocity of an impinging gas stream to less than 1 meter per second across the thickness of the velocity barrier layer. Furthermore, as part of a composite article, the velocity barrier layer should have a thickness and a thermal resistance such that the ratio of the velocity barrier layer thickness to the overall coating thickness (EBC plus velocity barrier layer) is within ±25% of the ratio of the velocity barrier layer thermal resistance to the overall coating thermal resistance. This serves to reduce discontinuities in temperature resulting in better durability.

In accordance with the present invention, preferred materials used for the velocity barrier layer of the present invention comprise a ceramic selected from the group consisting of alumina, alumina and mullite, titania, zirconia, hafnia, tantala, niobia, yttria, silica, alkaline earth oxides, refractory metal oxides, rare earth oxides, and mixtures thereof. The most preferred velocity barrier layer materials are porous hafnia, porous mullite, porous alumina, porous alumina plus mullite where the mullite is present in the range of 50 to 99% by weight, porous yttria, porous yttrium silicate ranging from 1:1 to 1:2 mole ratio of yttria and silica, porous zirconia, porous yttria stabilized zirconia where the yttria is present in the range of 1 to 20% by weight, porous niobia, porous niobia plus alumina where the alumina is present in the range of 20 to 80% by weight and mixtures thereof.

The effect of the velocity barrier layer in accordance with the present invention will be made clear from consideration of the following examples.

The article made from the composite of the present invention exhibits superior recession rate properties particularly when used as a component part in industrial gas turbines under high temperature aqueous conditions.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. A composite comprising a silicon based substrate, an environmental barrier coating (EBC) with a top layer, wherein the top layer comprises a velocity barrier layer.

2. A composite according to claim 1, wherein the substrate is selected from the group consisting of silicon nitride, silicon carbide, silicon aluminum oxynitride, silicon nitride composite, silicon carbide composite, silicon carbon nitride, molybdenum alloy containing silicon, niobium alloy containing silicon, iron alloy containing silicon, nickel alloy containing silicon, cobalt alloy containing silicon, and mixtures thereof.

3. A composite according to claim 1 or 2, wherein the EBC comprises a protective layer comprising of silicon, refractory oxides, refractory oxide silicates, refractory oxide aluminosilicates, rare earth oxides, rare earth silicates, rare earth aluminosilicates, alkaline earth oxides, alkaline earth silicates, alkaline earth aluminosilicates, yttria, yttrium silicate, yttrium aluminosilicate, barium aluminosilicate, strontium aluminosilicate, barium-strontium aluminosilicate, and oxides and silidices of molybdenum, silicon, tantalum, niobium, zirconium, hafnium, aluminum, titanium, and mixtures thereof.

4. A composite according to any one of claims 1 to 3, wherein the velocity barrier layer comprises a ceramic selected from the group consisting of alumina, alumina and mullite, zirconia, hafnia, tantala, niobia, yttria, silica, alkaline earth oxides, refractory metal oxides, rare earth oxides, and mixtures thereof.

5. A composite comprising a silicon based substrate, an environmental barrier coating (EBC) with velocity barrier layer:
wherein the substrate comprises silicon nitride, silicon carbide, silicon aluminum oxynitride, silicon nitride composite, silicon carbide composite, silicon carbon nitride, molybdenum alloy containing silicon, niobium alloy containing silicon, iron alloy containing silicon, nickel alloy containing silicon, cobalt alloy containing silicon, and mixtures and compounds thereof;
wherein the environmental barrier coating comprises one or more protective layer selected from the group consisting of silicon, refractory oxides, refractory oxide silicates, refractory oxide aluminosilicates, rare earth oxides, rare earth silicates, rare earth aluminosilicates, alkaline earth oxides, alkaline earth silicates, alkaline earth aluminosilicates, yttria, yttrium silicate, yttrium aluminosilicate, barium aluminosilicate, strontium aluminosilicate, barium strontium aluminosilicate, and oxides and silicides of silicon, molybdenum, tantalum, niobium, titanium, zirconium, hafnium, aluminum, titanium, and mixtures thereof;
and wherein the velocity barrier layer is selected from the group consisting of a ceramic comprising alumina, alumina and mullite, titania, zirconia, hafhia, tantalum oxide, niobium oxide, yttria, silica, alkaline earth oxides, refractory metal oxides, rare earth oxides, and mixtures thereof.

6. A composite according to any preceding claim, wherein the velocity barrier layer reduces the velocity of an impinging gas stream by at least 50% across the thickness of the velocity barrier layer.

7. A composite according to any preceding claim, wherein the velocity barrier layer reduces the velocity of an impinging gas stream to less than 1 meter per second across the thickness of the velocity barrier layer.

8. A composite according to any preceding claim, wherein the velocity barrier layer has a thickness and a thermal resistance such that the ratio of velocity barrier layer thickness to overall coating thickness is within ± 25% of the ratio of velocity barrier layer thermal resistance to the overall coating thermal resistance.

9. A composite according to any preceding claim, wherein the velocity barrier layer comprises a ceramic layer having a porosity in the range of 1 to 50% by volume.

10. A composite according to claim 9, wherein the velocity barrier layer comprises a ceramic layer having a porosity in the range of 10 to 35% by volume.

11. A composite according to any preceding claim, wherein the velocity barrier layer comprises a ceramic selected from the group consisting of porous hafhia, porous mullite, porous alumina, porous alumina plus mullite where the mullite is present in the range of 50 to 99% by weight, porous yttria, porous yttrium silicate ranging from 1:1 to 1:2 mole ratio of yttria and silica, porous zirconia, porous yttria stabilized zirconia where the yttria is present in the range of 1 to 20% by weight, porous niobia, porous niobia plus alumina where the alumina is present in the range of 20 to 80% by weight and mixtures thereof.

12. A turbine component formed from the composite of any preceding claim.
